# EUROPEAN PATENT SPECIFICATION

(11) **EP 2 184 459 B1**
(45) Date of publication and mention of the grant of the patent: **31.08.2011**
(21) Application number: 08828734.7
(22) Date of filing: 05.08.2008
(51) Int. Cl.: F01N 3/28, B01D 53/86, B01D 53/94, B01J 29/80, F01N 3/02, F01N 3/10, F01N 3/24, F01N 3/022, F01N 3/023

(54) **EXHAUST GAS PURIFICATION DEVICE**
ABGASREINIGUNGSVORRICHTUNG
DISPOSITIF DE PURIFICATION DES GAZ D'ÉCHAPPEMENT

(30) Priority: 31.08.2007 JP 2007226980
(43) Date of publication of application: 12.05.2010
(73) Proprietor: Honda Motor Co., Ltd., Minato-ku Tokyo 107-8556 (JP)
(72) Inventor: Matsumoto, Takeshi, Wako-shi Saitama 351-0193 (JP); Tamane, Yasuyuki, Wako-shi Saitama 351-0193 (JP)
(74) Representative: Herzog, Markus
(86) International application number: PCT/JP2008/064034
(87) International publication number: WO 2009/028310

(56) References cited:
- EP-A1- 1 795 720
- EP-A2- 1 312 776
- WO-A1-01/02083
- WO-A1-94/18441
- WO-A2-2007/078826
- JP-A- 08 108 076
- JP-A- 2003 161 138
- JP-A- 2005 264 866
- JP-A- 2006 077 591
- JP-A- 2006 090 185
- JP-A- 2006 233 935
- JP-A- 2007 218 219

## Description

### TECHNICAL FIELD

The present invention relates to an exhaust gas purification device, and in particular relates to an exhaust gas purification device that purifies exhaust gas emitted from an internal combustion engine such as a diesel engine with good efficiency.

### BACKGROUND ART

It has been known that particulate matter called particulates (hereinafter referred to as PM) is contained in exhaust gas emitted from an internal combustion engine in which lean combustion is performed as in a diesel engine. In recent years, the effects on the human body of these particulates has been a concern, and thus an exhaust gas purification device that efficiently collects particulates has been mounted on diesel vehicles, which emit exhaust gas containing such particulates.

Generally, a diesel particulate collection filter (DPF), a catalyzed soot filter (CSF) and the like have been used as an exhaust gas purification device to collect particulates. Each of these are devices that remove particulates by way of a filter housed inside; however, since particulates collect inside the filter with use, it is necessary to periodically or continuously remove the particulates from the filter and clean the filter. If the particulates deposit when exhaust gas passes through the filter, resistance is imparted by the particulates thus deposited, which is due to a pressure differential arising between the upstream side and the downstream side of the filter, and thus a so-called a pressure loss arising.

Here, as a general removal method of particulates, there is a method in which fuel is periodically injected into the exhaust system (exhaust path), the fuel thus injected is caused to combust by an oxidation catalyst, and particulates are combustively removed by the combustion heat generated at this time. However, in this method, fuel is necessary to combust the particulates, whereby there is a problem in that the fuel economy deteriorates.

On the other hand, as an alternate method, a method has been suggested in which a catalyst carrier to which a noble metal has been applied is arranged upstream of the filter, thereby improving the ignition properties of the particulates deposited on the filter, and the particulates are combusted at a relatively low temperature. However, in this method, in a case where the distance between the catalyst carrier and the filter is short, there has been a problem in that it becomes easy for the particulates to deposit on the filter.

Contrary to this, an exhaust gas purification device has been disclosed that is provided with a casing in an exhaust side of a diesel engine, houses inside this a filter that removes particulates in the exhaust gas, and houses upstream of the filter a catalyst carrier that causes harmful components of the exhaust gas to oxidize, and in which the catalyst carrier and the filter are disposed at a predetermined distance (for example, refer to Patent Document 1).
Patent Document 1: Japanese Unexamined Patent Application, Publication No. 2001-98936

In WO 01/02083 A1, on which the preamble of claim 1 is based, only a single layer casing for the honeycomb filter is shown.

In WO 94/18441 A1, a honeycomb filter 1 is fitted into an upstream portion 3a of an inner tube, the diameter thereof is enlarged in the downstream direction, so that a first downstream portion 3c of the inner tube fits into the outer tube 3. Thus, an airspace layer 6 formed between the upstream portion 2a of the inner tube and the outer tube 3, and the second airspace layer 3 is formed between the outer circumference of the downstream part of the honeycomb filter and the inner surface of the downstream part 2c of the inner tube. The outer tube has a constant diameter.

### DISCLOSURE OF THE INVENTION

### Problems to be Solved by the Invention

however, in the exhaust gas purification device disclosed in Patent Document 1, an improvement had been implemented to the arrangement and configuration of a carrier to which a catalyst is loaded and a catalyst loaded to a carrier by only defining a distance between the catalyst carrier and the filter As a result, a rise in pressure loss due to particulates depositing could be suppressed; however, raising the efficiency of catalyst activity could not be achieved simultaneously.

The present invention was made by taking the above such issues into account, and an object thereof is to provide an exhaust gas purification device that can suppress a rise in pressure loss due to deposition of particulates emitted from an internal combustion engine, and raise the efficiency of catalyst activity.

### Means for Solving the Problems

The present inventors have diligently researched to solve the above-mentioned problems, whereby they discovered that efficiency of catalyst activity could be raised and a rise in pressure loss in the particulate filter could be suppressed by disposing a honeycomb structure of metal to which a catalyst is loaded at an upstream side, and disposing a particulate filter to which an oxidation catalyst is loaded so that a loaded amount is different at a downstream side of the honeycomb structure, thereby arriving at completion of the present invention. More specifically, the present invention provides an exhaust gas purification device in accordance with claim 1.

According to a first aspect, an exhaust gas purification device, which is disposed in an exhaust passage of an internal combustion engine and purifies exhaust gas emitted from the internal combustion engine, includes: a first Purification unit including a honeycomb structure of metal on which a first oxidation catalyst is supported; and a second purification unit that is disposed downstream of the first purification unit and includes a particulate filter on which a second oxidation catalyst is supported so that loaded amounts at an upstream side thereof and a downstream side thereof are different.

In the exhaust gas purification device according to the first aspect, the honeycomb structure of metal to which the first oxidation catalyst is loaded is disposed at an upstream side. By making the carrier to which the catalyst is loaded a honeycomb structure of metal in this way, it is possible to raise the heat conductivity. From this, it becomes possible to cause the catalyst loaded to the honeycomb structure to be suitably activated,

In addition, since a honeycomb filter (honeycomb structure) of metal is used, for example, since it is not necessary to provide a heat insulating material layer in a matt shape between the filter and the retaining member that retains the honeycomb filter, which is necessary when using a ceramic filter or the like, it is possible to employ a high capacity filter.

In addition, the second oxidation catalyst is loaded so that the loaded amount of the upstream side and the downstream side of the particulate filter is different. It thus becomes possible to suppress a rise in pressure loss of the exhaust gas due to catalyst loading by applying a so-called zone coat to the particulate filter. It should be noted that zone coat implies coating a catalyst at predetermined positions on a carrier so the loaded amount of catalyst is different.

According to a second aspect, in the exhaust gas purification device as described in the first aspect, the honeycomb structure is retained at a retaining member, in which the retaining member is formed in two pieces including an inner tube and an outer tube, and an air space layer is formed between the inner tube and the outer tube.

In the second aspect of the exhaust gas purification device, the honeycomb structure is retained in a two-piece retaining member formed with an air space layer between the inner tube and the outer tube. As a result, for example, even in a case where heat conductivity is high, and a honeycomb structure of metal that is easily influenced by surrounding air and the like, it is possible to minimize these influences.

According to a third aspect, in the exhaust gas purification device as described in the first or second aspect, the particulate filter contains a larger loaded amount of the second oxidation catalyst at an upstream side thereof than at a downstream side thereof.

In the exhaust gas purification device according to the third aspect, the second oxidation catalyst is loaded to be relatively abundant at an upstream side of the particulate filter more than at a downstream side thereof. It thus becomes possible to effectively activate the catalyst by loading the second oxidation catalyst to be abundant at an upstream side of the particulate filter, which is easily influenced by the heat of exhaust due to contacting the exhaust gas first. Thus, catalyst activity is improved, whereby it becomes possible to efficiency purify the exhaust gas.

In addition, it becomes possible to suppress the influence of deterioration of the second oxidation catalyst due to temperature rising, even in a case where a heater and the like used in regeneration of the particulate filter is disposed at a downstream side, for example, by making the loaded amount of the second oxidation catalyst on a downstream side of the particulate filter less than that on an upstream side. From this it becomes possible to decrease manufacturing cost and maintenance cost.

According to a fourth aspect, in the exhaust gas purification device as described in any one of the first to third aspects, a region having a relatively larger loaded amount of the second oxidation catalyst is formed from the upstream side of the particulate filter in a region in the range of 20 to 80% of a length of the particulate filter in an axial direction.

In the exhaust gas purification device according to the fourth aspect, a region in which the second oxidation catalyst is loaded to be relatively abundant is formed from an upstream side of the particulate filter at a region in the range of 20 to 80% of a length in an axial direction of the particulate filter. In this way, it becomes possible to suppress the influence on purification performance due to exhaust gas accessibility, exhaust gas pressure loss, catalyst deterioration and the like, even in a case where the second oxidation catalyst is loaded to be dispersed so as to be uniform over the entire particulate filter, by providing a region in which the second oxidation catalyst is loaded to be relatively abundant at a region in a range of 20 to 80% of a length of the particulate filter from an upstream side of the particulate filter.

According to a fifth aspect, in the exhaust gas purification device as described in any one of the first to fourth aspects, the first oxidation catalyst at least contains Pt, alumina, ceria and a zeolite.

In the exhaust gas purification device according to the fifth aspect, the first oxidation catalyst that is used in the first purification unit contains at least Pt, alumina, ceria, and a zeolite. By employing Pt, which has high oxidative power, in the first oxidation catalyst, it becomes possible to combustively remove HC and CO contained in the exhaust gas from a low temperature. In addition, it becomes possible to adsorb NOx and hydrocarbons up to an active temperature by having ceria, which is a NOx adsorbent, and a zeolite, which is a hydrocarbon (HC) adsorbent, coexisting. Moreover, since hydrocarbons oxidized with Pt or Pd reduce NOx, it becomes possible to improve NOx purification performance even in a case where NOx and hydrocarbons desorb along with a rise in temperature. Furthermore, since ceria and a zeolite coexist in the same catalyst layer, i.e. each exist in the vicinity of one another, it becomes possible to promote reaction.

According to a sixth aspect, in the exhaust gas purification device as described in any one of the first to fifth aspects, the first purification unit includes one or more of the honeycomb structure.

The exhaust gas purification device according to the sixth aspect comprises at least one honeycomb structure in the first purification unit. In the case of honeycomb structures being multiply installed, the purification efficiency can be improved.

According to a seventh aspect, in the exhaust gas purification device as described in any one of the first to sixth aspects, the second oxidation catalyst at least contains Pt, Pd and alumina.

In the exhaust gas purification device according to the seventh aspect, the second oxidation catalyst used in the second purification unit contains at least Pt, Pd, and alumina. By dispersing an active metal such as Pt and Pd upon coating an inorganic oxide having fire resistance such as alumina, it becomes possible to improve low temperature oxidation activity to HC and CO contained in the exhaust gas.

### Effects of the Invention

According to the present invention, an exhaust gas purification device can be provided that is capable of raising the efficiency of catalyst activity and suppress a rise in pressure loss due to deposition of particulates emitted from an internal combustion engine.

### BRIEF DESCRIPTION OF THE DRAWINGS

FIG. 1 is an outline configuration of an internal combustion engine 10 provided with an exhaust gas purification device 1 related to an embodiment of the present invention;
FIG. 2 is a view showing an overall configuration of an exhaust gas purification device 1 related to the embodiment of the present invention;
FIG. 3 is an outline configuration of a state in which a portion of a casing 5 of the first purification unit 2 related to the embodiment of the present invention has been cut away;
FIG. 4 is a longitudinal section of the first purification unit 2 related to the embodiment of the present invention;
FIG. 5 is an outline configuration of a particulate filter of a second purification unit 3 related to the embodiment of the present invention;
FIG. 6 is an outline configuration of catalyst loaded to the particulate filter related to the embodiment of the present invention;
FIG. 7 is a schematic view showing adsorption/purification of NOx and hydrocarbons (HC);
FIG. 8 is a schematic showing a reaction state of NOx and hydrocarbons (HC); and
FIG. 9 is a graph showing a relationship between a proportion (%) of zone coat and CO light-off temperature (°C) obtained from the Examples and Comparative Examples.

### EXPLANATION OF REFERENCE NUMERALS

- 1: Exhaust gas purification device
- 2: first purification unit
- 3: second purification unit
- 4: honeycomb filter
- 5, 7: casing
- 6: particulate filter
- 51: inner tube
- 52: outer tube
- 53: air gap

### PREFERRED MODE FOR CARRYING OUT THE INVENTION

Hereinafter, embodiments of the present invention are explained with reference to the drawings. It should be noted that "upstream" and "downstream" in the present embodiment are set to indicate "upstream" and "downstream" relative to the flow of exhaust gas emitted from the internal combustion engine.

### Overall Configuration of Internal Combustion Engine

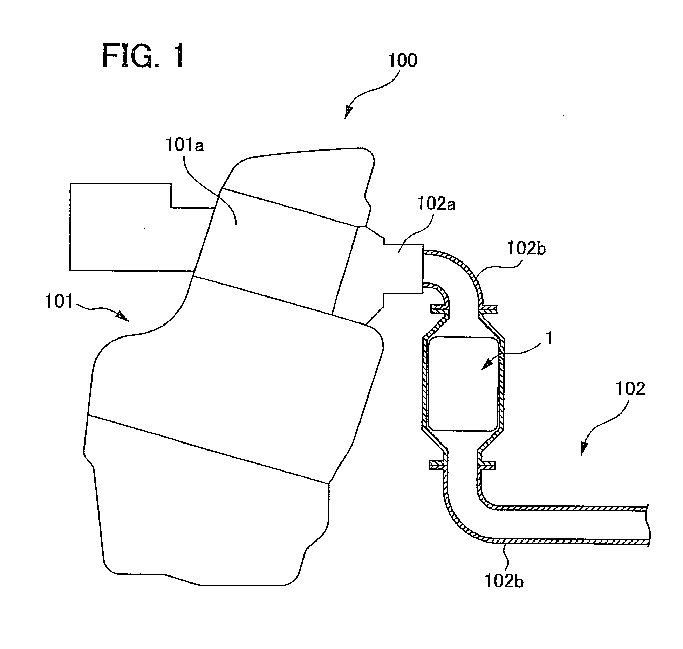

An outline configuration of an internal combustion engine (hereinafter referred to as engine) 100 provided with an exhaust gas purification device 1 related to an embodiment of the present invention is shown in FIG. 1. As shown in FIG. 1, the engine 100 provided with the exhaust gas purification device 1 related to the embodiment of the present invention includes an engine main body 101 in which combustion chambers are formed, and an exhaust system 102 connected to the engine main body 101, and forming an exhaust gas path that guides exhaust gas, which is combustion gas exhausted from the combustion chamber, to outside of the engine 100.

The exhaust system 102 is provided with an exhaust manifold 102a that is connected to a cylinder head 101a of the engine main body, and an exhaust pipe 102b that is connected to the exhaust manifold 102a and forms an exhaust path. Then, the exhaust purification device 1 related to the embodiment of the present invention is disposed through the exhaust pipe 102b directly after the exhaust manifold 102a, which is connected to the engine main body 101, adsorbs/purifies NOx and hydrocarbons (HC) emitted from the engine 100, and purifies particulates (PM).

### Overall Configuration of Exhaust Gas Purification Device

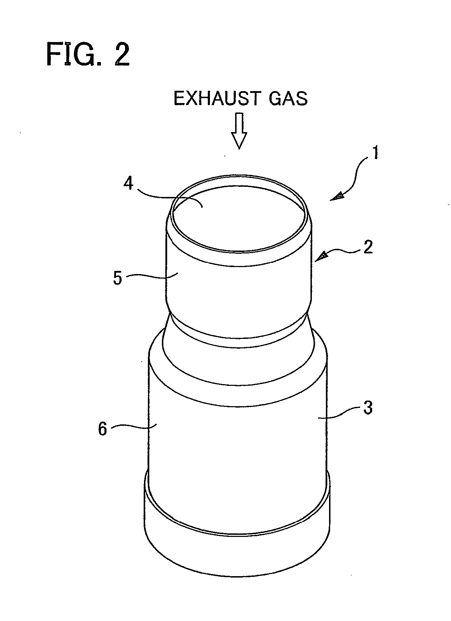

The exhaust gas purification device 1 related to the embodiment of the present invention is shown in FIG. 2. As shown in FIG. 2, the exhaust gas purification device 1 is provided with a first purification unit 2 that is disposed at an upstream side and includes a honeycomb filter 4, which is a honeycomb structure, and a second purification unit 3 that is disposed at an downstream side of the first purification unit 2 and has a particulate filter (a high porosity material to which a second oxidation catalyst has been applied) 6.

The second purification unit 3 is disposed on a downstream side of the first purification unit 2 so as to be continuous with the first purification unit 2. Then, the first purification unit 2 and the second purification unit 3 have inner regions that are mutually communicative, and the inside thereof is made in a configuration that allows exhaust gas to flow.

### First Purification Unit

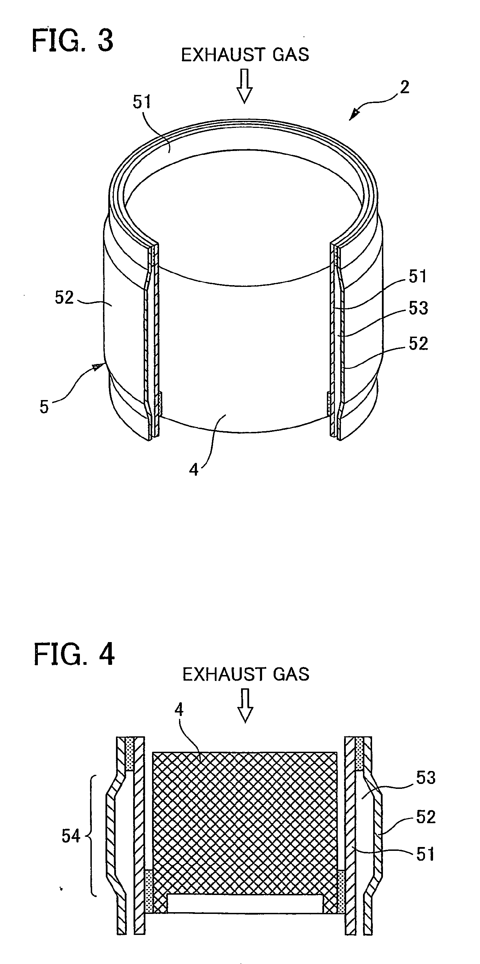

An outline configuration of a state in which a portion of the casing 5, which is a retaining member of the first purification unit 2 related to the embodiment of the present invention has been cut away is shown in FIG. 3. In addition, FIG. 4 shows a longitudinal section of the first purification unit 2 related to the embodiment of the present invention. As shown in FIG. 3, the first purification unit 2 includes a honeycomb filter 4 that has a honeycomb structure in which multiple cells are formed of metal (not illustrated), and a casing 5 that is formed in a cylindrical shape and retains the honeycomb filter 4.

The honeycomb filter is formed by way of loading the first oxidation catalyst by wash coating or the like onto a honeycomb carrier of cylindrical shape. As the honeycomb carrier, for example, one formed by superimposing each of a corrugated board and a flat board composed of metallic foil, and winding these into a roll shape may be used. In addition, the material of the honeycomb carrier may be any metal so long as having electrical conductivity and, for example, stainless steel, Ni-Cr alloy or the like can be exemplified.

Pt, Pd, alumina, silica alumina, a NOx adsorbent, and a HC adsorbent can be exemplified as the catalyst components configuring the first oxidation catalyst loaded to the honeycomb filter. As the NOx adsorbent, for example, a ceria-zirconia composite oxide that has been stabilized by ceria and zirconia can be exemplified. In addition, a beta zeolite and MFI zeolite can be exemplified as the HC adsorbent, for example.

It should be noted that the catalyst layer with the first oxidation catalyst of the present embodiment includes two layers of catalyst layers: a catalyst layer composed of an MFI zeolite and ceria-zirconia composite oxide, and a catalyst layer composed of a beta zeolite and ceria-zirconia composite oxide.

As a method of coating the first oxidation layer, a general coating method is used in which a slurry is prepared with the first oxidation catalyst material, the honeycomb filter is dipped into this slurry, and then dried/fired after removing excess slurry.

As shown in FIG. 4, the casing 5 retains the honeycomb filter 4 so that the axial direction of the honeycomb filter 4, which is formed in a cylindrical shape, is the direction in which exhaust gas flows. In addition, the casing 5 includes an inner tube 51 that retains the honeycomb filter 4, and an outer tube 52 that is disposed on an outer side of the inner tube 51 so as to cover the inner tube 51. In other words, the casing 5 is formed so as to make a two layer structure of the inner tube 51 and the outer tube 52.

The inner tube 51 is formed in a cylindrical form that can retain the honeycomb filter 4, which is formed in a cylindrical shape. A projecting portion 54, which is formed by an outer circumferential surface of the outer tube 52 protruding in an outward direction of the casing 5, is provided in the outer tube 52. The projecting portion 54 is formed so that a diameter of the outer tube 52 is larger than a diameter of the outer tube 52 at both end portions in the axial direction.

When the inner tube 51 and the outer tube 52 formed as such are overlapped so that the outer tube 52 is an outer layer, an air gap 53, which is a air space layer, is formed between the projecting portion 54 and the inner tube 51. Stainless steel, Ni-Cr alloy and the like can be exemplified as the material configuring the casing 5, for example.

### Second Purification Unit

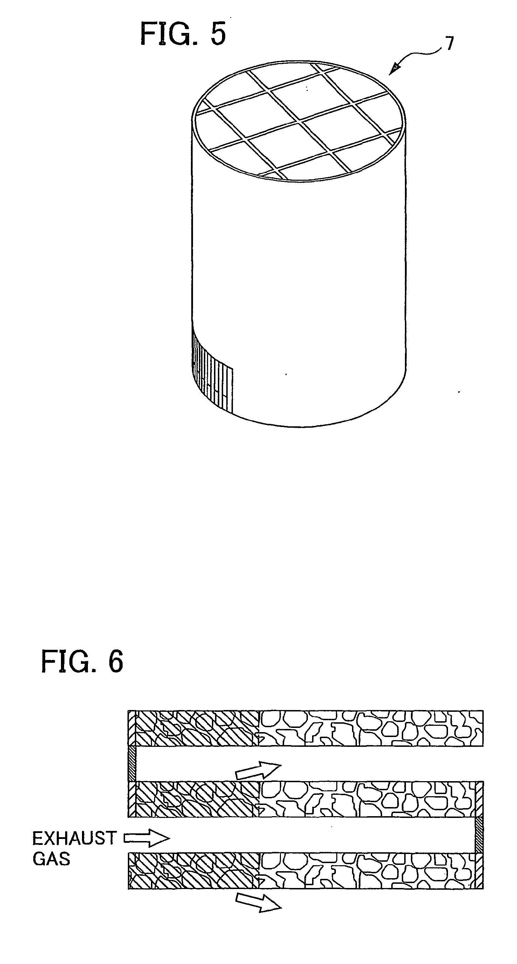

An outline configuration of the particulate filter 6 of the second purification unit 3 related to the embodiment of the present invention is shown in FIG. 5. In addition, FIG. 6 shows an outline configuration of the catalyst loaded to be supported on the particulate filter 6 related to the embodiment of the present invention. The second purification unit 3 has the particulate filter 6 that purifies particulates, and a casing 7 that is formed in a cylindrical shape and retains the particulate filter 6.

As shown in FIG. 5, the particulate filter 6 uses a wall flow-type filter, and has porous walls and a catalyst coating layer. The catalyst coating layer is configured with the second oxidation catalyst, and is formed on a surface of the porous walls.

The structure of the porous wall may be of wall flow-type as in the present embodiment and, for example, may be a structure in which both end faces are alternately sealed by a three-dimensional mesh or honeycomb structure. Furthermore, it may be a structure in which a fibrous material has been laminated and molded into a felt shape.

Cordierite, silicon carbide, mullite, alumina and the like can be exemplified as the material of the particulate filter 6.

Pt, Pd, alumina, silica alumina, and a HC adsorbent can be exemplified as the catalyst components of the second oxidation catalyst supported on the particulate filter 6. A beta zeolite and an MFI zeolite can be exemplified, for example, as the HC adsorbent.

As shown in FIG. 6, the particulate filter 6 has the second oxidation catalyst coated so that the loaded amounts of catalyst at the upstream side thereof and downstream side thereof are different. For example, zone coating to make a loaded amount of Pt of the second oxidation catalyst be relatively small at a downstream side is conducted by further coating the second oxidation catalyst, which has a relatively large loaded amount of Pt, at an upstream side. A region in the range of 20 to 80% of the length in the axial direction of the particulate filter 6 is preferable as a region on the upstream side at which the loaded amount of Pt applied is relatively increased.

As a method of coating the second oxidation catalyst, a method similar to that of the first oxidation catalyst can be used. In addition, in the so-called zone coat, in which second oxidation catalysts having different loaded amounts of catalyst are coated to the upstream side and the downstream side, first the second oxidation catalyst that has a relatively small loaded amount of Pt is coated over the entire body, and dried, after which the second oxidation catalyst, in which the catalyst is controlled to a predetermined concentration to have a relatively large loaded amount of Pt, is further coated at predetermined areas.

### Operation of Exhaust Gas Purification Device of Present Invention

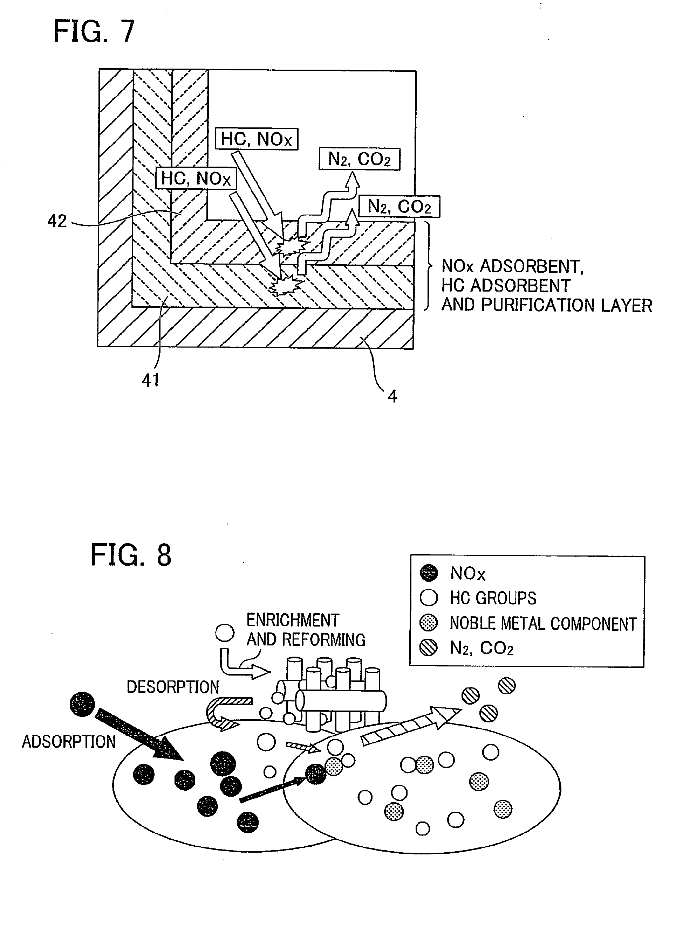

Next, operation of the exhaust gas purification device of the present invention will be explained using FIGS. 7 and 8. FIG. 7 is a schematic view showing adsorption/purification of NOx and hydrocarbons (HC). FIG. 8 is a schematic view showing a reaction state of NOx and hydrocarbons.

Upon the engine 100 starting, exhaust gas from the engine 100 is emitted. Hydrocarbons, PM, NOx, etc. are contained in the exhaust gas, and these flow to the exhaust gas purification device 1 via the exhaust pipe 102b. As shown in FIG. 7, in the honeycomb filter 4 of the first purification unit 2 disposed at an upstream side of the exhaust gas purification device 1, a hydrocarbon adsorbent (e.g., MFI zeolite or beta zeolite) and a NOx adsorbent (e.g., CeZrOx) are respectively loaded in the first catalyst layer 41 and the second catalyst layer 42, and a portion of the hydrocarbons and NOx contained in the exhaust gas are temporarily adsorbed to the hydrocarbon adsorbent and NOx adsorbent here.

When the exhaust gas emitted from the engine 100 raises in temperature with the elapse of time, the hydrocarbon adsorbent becomes such that hydrocarbons are desorbed more than hydrocarbons are adsorbed, and thus the amount of hydrocarbons desorbed from the hydrocarbon adsorbent becomes gradually larger that the amount of hydrocarbons adsorbed to the hydrocarbon adsorbent. Similarly, the NOx adsorbent becomes such that NOx is desorbed more than NOx is adsorbed, and thus the amount of NOx desorbed from the NOx adsorbent gradually becomes larger than the amount of NOx adsorbed to the NOx adsorbent.

As shown in FIG. 8, the hydrocarbons thus desorbed from the hydrocarbon adsorbent contact with the first oxidation catalyst (e.g., Pt and Al₂O₃), contact with NOx thus desorbed from the NOx adsorbent, and reduce the NOx. Then, the hydrocarbons are combusted by contacting with the first oxidation catalyst. At this time, since the hydrocarbon adsorbent and NOx adsorbent are loaded on the same catalyst layer and exist in close proximity, the reaction between NOx and hydrocarbons is promoted, thereby improving NOx purification performance.

The combustion heat generated from combustion at the first oxidation catalyst spreads and conducts to the surroundings due to the honeycomb filter 4 of metal, which excels in heat conductance. Furthermore, the combustion heat thus generated conducts to the second purification unit 3 provided at a downstream side of the first purification unit 2 as well as from the upstream side of the second purification unit 3 also, and the second oxidation catalyst raises in temperature. It should be noted that the honeycomb filter 4 is not easily affect by outside air due to being retained by the casing 5, which has a two layer structure, and thus the combustion heat generated is efficiently conducted.

In addition, hydrocarbons and NOx that has not been adsorbed to the honeycomb filter 4 of the first purification unit 2 flows to the second purification unit 3. Here, the hydrocarbons contact with the second oxidation catalyst (e.g., Pt, Pd and Al₂O₃) loaded in the catalyst layer of the particulate filter 6 of the second purification unit 3, contact with NOx, and reduce the NOx. Then, the hydrocarbons combust by contacting with the second oxidation catalyst.

Here, in the particulate filter 6, it becomes possible to effectively activate the catalyst, and possible to suppress a rise in pressure loss by applying zone coating in which the oxidation catalyst such as Pt is loaded to be abundant at an upstream side which is easily affected by the heat of exhaust gas due to contacting the exhaust gas first. From this it becomes possible for the exhaust gas to be more efficiently purified.

### EXAMPLES

Next, the present invention is further explained based on Examples; however, the present invention is not to be limited thereto.

### Honeycomb Filter

A honeycomb carrier of stainless steel was prepared as the honeycomb filter. Pt, alumina, silica-alumina, a ceria-zirconia composite oxide (CeZrOx), a beta zeolite and a ZSM-5 zeolite were prepared as the first oxidation catalyst to be loaded to the honeycomb carrier. The honeycomb filter was configured with catalyst layers in two layers that contained beta zeolite and Pt, alumina, silica-alumina, ceria-zirconia composite oxide (CeZrOx); and ZSM-5 zeolite and Pt, alumina, silica-alumina, and ceria-zirconia composite oxide (CeZrOx).

### Particulate Filter

A wall-flow type DPF of silicon carbide with a length of 152.4 mm (L) and diameter of 143.8 mm (ϕ) was prepared as the particulate filter. Pt, Pd, alumina, silica-alumina, beta zeolite and ZSM-5 zeolite were prepared as the second oxidation catalyst supported to the particulate filter.

### Example 1

The particulate filter was immersed in a slurry composed of the second oxidation catalyst, dried after excess slurry was removed therefrom, and fired, after which the second oxidation catalyst was coated from the upstream side of the particulate filter up to a position of 80% thereof, dried, and then fired. As a result, a particulate filter having a zone coating proportion of 80% was prepared. In the particulate filter, a Pt amount in the zone coated portion (portion in which loaded amount of the second oxidation catalyst is relative high) was 2.25 g/L, a Pt amount in the non-zone coated portion (portion in which loaded amount of the second oxidation catalyst is relative low) was 1.00 g/L, and an overall Pt amount was 2.00 g/L. An exhaust gas purification device was prepared in which the above-mentioned honeycomb filter and this particulate filter were respectively disposed at an upstream side and a downstream side thereof.

In the exhaust gas purification device, at constant conditions of an engine revolution speed of 2000 rpm, the exhaust gas temperature was changed by changing the load on the diesel engine, and the HC light-off T50 temperature was measured. It should be noted that the HC light-off T50 temperature is the exhaust gas temperature when HC purification efficiency shows 50%.

### Example 2

A particulate filter was prepared having a zone coating proportion of 66.7% by the same method as Example 1. In the particulate filter, a Pt amount in the zone coated portion was 2.50 g/L, a Pt amount in the non-zone coated portion was 1.00 g/L, and an overall Pt amount was 2.00 g/L. An exhaust gas purification device was prepared in which the above-mentioned honeycomb filter and this particulate filter were respectively disposed at an upstream side and a downstream side thereof. This exhaust gas purification device was operated similarly to Example 1.

### Example 3

A particulate filter was prepared having a zone coating proportion of 50% by the same method as Example 1. In the particulate filter, a Pt amount in the zone coated portion was 3.00 g/L, a Pt amount in the non-zone coated portion was 1.00 g/L, and an overall Pt amount was 2.00 g/L. An exhaust gas purification device was prepared in which the above-mentioned honeycomb filter and this particulate filter were respectively disposed at an upstream side and a downstream side thereof. This exhaust gas purification device was operated similarly to Example 1.

### Example 4

A particulate filter was prepared having a zone coating proportion of 33.3% by the same method as Example 1. In the particulate filter, a Pt amount in the zone coated portion was 4.10 g/L, a Pt amount in the non-zone coated portion was 1.00 g/L, and an overall Pt amount was 2.03 g/L. An exhaust gas purification device was prepared in which the above-mentioned honeycomb filter and this particulate filter were respectively disposed at an upstream side and a downstream side thereof. This exhaust gas purification device was operated similarly to Example 1.

### Example 5

A particulate filter was prepared having a zone coating proportion of 20.0% by the same method as Example 1. In the particulate filter, a Pt amount in the zone coated portion was 6.00 g/L, a Pt amount in the non-zone coated portion was 1.00 g/L, and an overall Pt amount was 2.00 g/L. An exhaust gas purification device was prepared in which the above-mentioned honeycomb filter and this particulate filter were respectively disposed at an upstream side and a downstream side thereof. This exhaust gas purification device was operated similarly to Example 1.

### Example 6

A particulate filter was prepared having a zone coating proportion of 10.0% by the same method as Example 1. In the particulate filter, a Pt amount in the zone coated portion was 11.00 g/L, a Pt amount in the non-zone coated portion was 1.00 g/L, and an overall Pt amount was 2.00 g/L. An exhaust gas purification device was prepared in which the above-mentioned honeycomb filter and this particulate filter were respectively disposed at an upstream side and a downstream side thereof. This exhaust gas purification device was operated similarly to Example 1.

### Comparative Example 1

An exhaust gas purification device arranged with a particulate filter having a zone coating proportion of 100% was prepared. In the particulate filter, the overall Pt amount was set to 2.00 g/L. The exhaust gas purification device was prepared in which the above-mentioned honeycomb filter and this particulate filter were respectively disposed at an upstream side and a downstream side thereof. This exhaust gas purification device was operated similarly to Example 1.

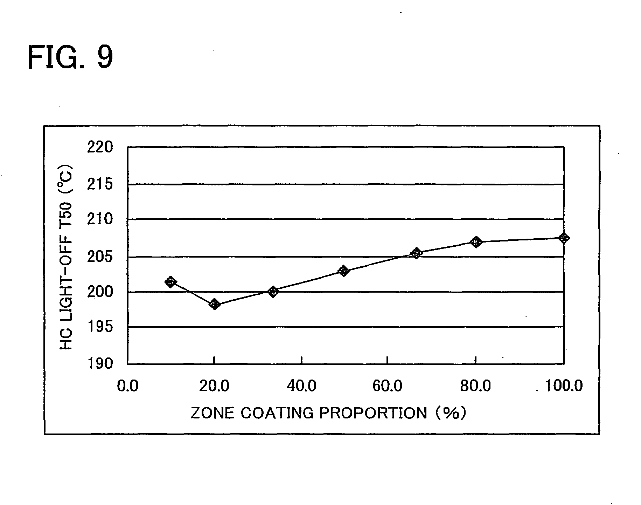

A relationship of Pt amounts in the zone coated portion and non-zone coated portion for the Examples and Comparative Example is shown in Table 1. In addition, a chart plotting the HC light-off T50 temperature (°C) relative to a proportion of zone coating (%) obtained from the Examples and Comparative Example is shown in FIG. 9.

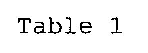

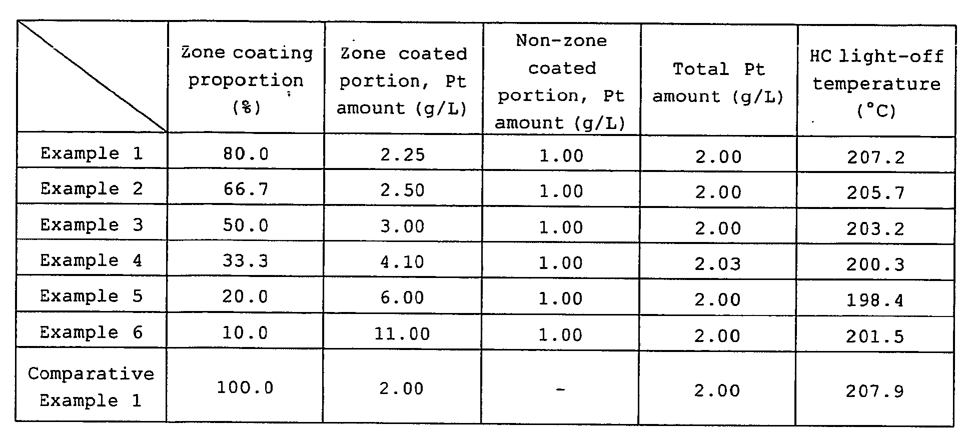

As shown in FIG. 9, by setting a proportion of a zone coated portion of catalyst loaded on the particulate filter to be no more than 80% relative to a length of the particulate filter, it becomes possible to dispose a catalyst abundantly containing active metal at an upstream portion that exhaust gas easily contacts, increase the purification efficiency of exhaust gas with the catalyst, and improve low temperature HC purification performance.

In addition, when the zone coating proportion is greater than 80%, the performance difference over that uniformly coated becomes small, whereby it is understood that the effectiveness of zone coating, when taking into consideration catalyst deterioration due to a temperature rise at a tail end portion during DPF regeneration, is small.

On the other hand, when the zone coating proportion is lower than 20%, although an improvement in low temperature HC purification performance can be observed compared to a case of being uniformly coated, there is concern over performance deteriorating since particle growth is promoted by sintering due to the concentration of active metal being high in addition to the metal intergranular spacing being small, and thus contact probability with the exhaust gas becomes low. Furthermore, manufacturing control of the catalyst during production of zone coating becomes tight, and there is concern over performance variation deterioration.

Next, the exhaust gas purification devices used by Example 5 and Comparative Example 1 was prepared. Air at a flow rate of 300 m³/h was flowed through each of the exhaust gas purification devices. Pressure gauges were set at the upstream side and the downstream side of the exhaust gas purification device, and the pressure differential (pressure loss) between the upstream side and down stream side of the exhaust gas purification device was measured. In the exhaust gas purification device of Example 5, which had a zone coating proportion of 20%, the pressure differential was 2.06 kPa. In the exhaust gas purification device of Comparative Example 1, which had a zone coating proportion of 100%, the pressure differential was 2.56 kPa. From this it can be understood that the exhaust gas purification device according to Example 5, which had a zone coating proportion of 20%, has a smaller pressure loss than the exhaust gas purification device according to Comparative Example 1, which had a zone coating proportion of 100%.

## Claims

1. An exhaust gas purification device that is disposed in an exhaust passage (102) of an internal combustion engine (101), and purifies exhaust gas emitted from the internal combustion engine, the device (1) comprising:
a first purification unit (2) including a honeycomb structure (4) of metal on which a first oxidation catalyst is supported, wherein the honeycomb structure (4) is retained at a casing (5); and
a second purification unit (3) that is disposed downstream of the first purification unit (2) and includes a particulate filter (6) on which a second oxidation catalyst is supported,
**characterized in that** the second oxidation catalyst on the particulate filter (6) is supported so that loaded amounts at an upstream side thereof and a downstream side thereof are different, wherein
the casing (5) is formed in two pieces including an inner tube (51) and an outer tube (52),
a projecting portion (54), which is formed by an outer circumferential surface of the outer tube (52) protruding in an outward direction of the casing (5), is provided in the outer tube (52) and is formed so that a diameter of the outer tube (52) at the projecting portion (54) is larger than a diameter of the outer tube (52) at both end portions in the axial direction, and
an air space layer (53) is formed between the projecting portion (54) and the inner tube (51).

2. The exhaust gas purification device according to claim 1, wherein the particulate filter (6) contains a larger loaded amount of the second oxidation catalyst at an upstream side thereof than at a downstream side thereof.

3. The exhaust gas purification device according to claims 1 or 2, wherein a region having a relatively larger loaded amount of the second oxidation catalyst is formed from the upstream side of the particulate filter (6) in a region in the range of 20 to 80% of a length of the particulate filter (6) in an axial direction.

4. The exhaust gas purification device according to any one of claims 1 to 3, wherein the first oxidation catalyst at least contains Pt, alumina, ceria and a zeolite.

5. The exhaust gas purification device according to any one of claims 1 to 4, wherein the first purification unit (2) includes one or more of the honeycomb structure (4).

6. The exhaust gas purification device according to any one of claims 1 to 5, wherein the second oxidation catalyst at least contains Pt, Pd and alumina.

## Patentansprüche

1. Abgasreinigungsvorrichtung, die in einem Auslasskanal (102) eines Verbrennungsmotors (101) angeordnet ist und von dem Verbrennungsmotor abgegebenes Abgas reinigt, wobei die Vorrichtung (1) umfasst:
eine erste Reinigungseinheit (2), die eine Metall-Bienenwabenstruktur (4) enthält, auf der ein erster Oxidationskatalysator angebracht ist, worin die Bienenwabenstruktur (4) an einem Gehäuse (5) befestigt ist; und
eine zweite Reinigungseinheit (3), die stromab der ersten Reinigungseinheit (2) angeordnet ist und einen Partikelfilter (6) enthält, auf dem ein zweiter Oxidationskatalysator angebracht ist,
**dadurch gekennzeichnet, dass** der zweite Oxidationskatalysator an dem Partikelfilter (6) derart angebracht ist, dass Beladungsmengen an seiner stromaufwärtigen Seite und seiner stromabwärtigen Seite unterschiedlich sind, worin
das Gehäuse (5) in zwei Stücken ausgebildet ist, die ein Innenrohr (51) und ein Außenrohr (52) enthalten,
ein Vorsprungsabschnitt (54), der durch eine in auswärtiger Richtung des Gehäuses (5) vorstehende Außenumfangsfläche des Außenrohrs (52) gebildet ist, in dem Außenrohr (52) vorgesehen und derart ausgebildet ist,
dass ein Durchmesser des Außenrohrs (52) an dem Vorsprungsabschnitt (54) größer ist als ein Durchmesser des Außenrohrs (52) an beiden Endabschnitten in der axialen Richtung, und
eine Luftraumschicht (53) zwischen dem Vorsprungsabschnitt (54) und dem Innenrohr (51) ausgebildet ist.

2. Die Abgasreinigungsvorrichtung nach Anspruch 1, worin der Partikelfilter (6) an seiner stromaufwärtigen Seite eine größere Beladungsmenge des zweiten Oxidationskatalysators enthält als an seiner stromabwärtigen Seite.

3. Die Abgasreinigungsvorrichtung nach Anspruch 1 oder 2, worin ein Bereich, der eine relativ größere Beladungsmenge des zweiten Oxidationskatalysators aufweist, von der stromaufinrärtigen Seite des Partikelfilters (6) in einer Region im Bereich von 20 bis 80 % einer Länge des Partikelfilters (6) in axialer Richtung ausgebildet ist.

4. Die Abgasreinigungsvorrichtung nach einem der Ansprüche 1 bis 3, worin der erste Oxidationskatalysator zumindest Pt, Aluminiumoxid, Ceroxid und ein Zeolit enthält.

5. Die Abgasreinigungsvorrichtung nach einem der Ansprüche 1 bis 4, worin die erste Reinigungseinheit (2) eine oder mehrere Bienenwabenstruktur(en) (4) enthält.

6. Die Abgasreinigungsvorrichtung nach einem der Ansprüche 1 bis 5, worin der zweite Oxidationskatalysator zumindest Pt, Pd und Aluminiumoxid enthält.

## Revendications

1. Dispositif de purification des gaz d'échappement qui est disposé dans un passage d'échappement (102) d'un moteur à combustion interne (101) et purifie les gaz d'échappement émis par un moteur à combustion interne, le dispositif (1) comprenant :
une première unité de purification (2) comprenant une structure en nid d'abeilles (4) en métal sur laquelle est supporté un premier catalytiseur à oxydation, dans lequel la structure en nid d'abeilles (4) est retenue au niveau d'un boîtier (5) ; et
une deuxième unité de purification (3) qui est disposée en aval de la première unité de purification (2) et comprend un filtre à particules (6) sur lequel est supporté un deuxième catalytiseur à oxydation,
**caractérisé en ce que** le deuxième catalytiseur à oxydation sur le filtre à particules (6) est supporté de sorte que les quantités chargées au niveau de son côté en amont et de son côté en aval sont différentes, dans lequel :
le boîtier (5) est formé en deux pièces comprenant un tube interne (51) et un tube externe (52),
une partie en saillie (54) qui est formée par une surface circonférentielle externe du tube externe (52) faisant saillie dans une direction vers l'extérieur du boîtier (5), est prévue dans le tube externe (52) et est formée de sorte qu'un diamètre du tube externe (52) au niveau de la partie en saillie (54) est plus grand qu'un diamètre du tube externe (52) au niveau des deux parties d'extrémité dans la direction axiale, et
une couche d'espace d'air (53) est formée entre la partie en saillie (54) et le tube interne (51).

2. Dispositif de purification des gaz d'échappement selon la revendication 1, dans lequel le filtre à particules (6) contient une plus grande quantité chargée du deuxième catalytiseur à oxydation au niveau de son côté en amont qu'au niveau de son côté en aval.

3. Dispositif de purification des gaz d'échappement selon les revendications 1 ou 2, dans lequel une région ayant une quantité chargée relativement plus importante du deuxième catalytiseur à oxydation est formée du côté en amont du filtre à particules (6) dans une région de l'ordre de 20 à 80% d'une longueur du filtre à particules (6) dans une direction axiale.

4. Dispositif de purification des gaz d'échappement selon l'une quelconque des revendications 1 à 3, dans lequel le premier convertisseur catalytique à oxydation contient au moins du Pt, de l'alumine, de l'oxyde de cérium et une zéolite.

5. Dispositif de purification des gaz d'échappement selon l'une quelconque des revendications 1 à 4, dans lequel la première unité de purification (2) comprend une ou plusieurs des structures en nid d'abeilles (4).

6. Dispositif de purification des gaz d'échappement selon l'une quelconque des revendications 1 à 5, dans lequel le deuxième catalytiseur à oxydation contient du Pt, du Pd et de l'alumine.
